(19)

Europäisches
Patentamt
European
Patent Office
Office européen
des brevets

(11) **EP 3 142 098 A1**

(12) **EUROPEAN PATENT APPLICATION**

(43) Date of publication:
**15.03.2017 Bulletin 2017/11**

(51) Int Cl.:
*G09G 3/20* $^{(2006.01)}$     *G02B 27/01* $^{(2006.01)}$

(21) Application number: **15306379.7**

(22) Date of filing: **09.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ESSILOR INTERNATIONAL (COMPAGNIE GENERALE D'OPTIQUE) 94220 Charenton-le-Pont (FR)**

(72) Inventors:
• **PERRIER, Jean-Baptiste 94227 CHARENTON-LE-PONT CEDEX (FR)**
• **CALLIER, Benoit 94220 CHARENTON-LE-PONT (FR)**

(74) Representative: **Cabinet Novitech 188 Grande rue Charles de Gaulle 94130 Nogent-sur-Marne (FR)**

(54) **A DISPLAY MANAGING METHOD AND COMPONENT FOR AN OPTICAL SEE-THROUGH DISPLAYING DEVICE**

(57)     The invention relates to a display managing method for managing the display of an image from a source image (2) to a user of an optical see-through displaying device, the source image (2) comprising a plurality of zones (4, 6), the method comprises:
- a display data providing step (S1), during which display data relative to at least one intrinsic display parameter of the optical see-through displaying device are provided,
- a source image data providing step (S2), during which source image data are provided, the source image data comprising for each zone (4, 6) at least an indication of the value of the zone brightness of the source image (2), and
- a displayed image data determining step (S3), during which displayed image data are determined, the displayed image data comprising for each zone (4, 6) at least an adjusted value of the zone brightness determined based on a non-linear function of at least the display data and the source image data.

Figure 2

**Description**

FIELD OF THE INVENTION

The invention relates to a display managing method and corresponding component for managing the display of an image from a source image to a user of an optical see-through displaying device. The invention further refers to an optical see-through displaying device and a head mounted optical see-through displaying device configured to be worn by a user comprising such a display managing component.

BACKGROUND OF THE INVENTION

A head mounted device (HMD) is an electro-optical device worn on the head by a user. Usually such device is electronically controlled so as to display information to the user. A head mounted device usually presents like a spectacle frame with electronically controlled spectacle lenses.

The present invention is concerned with a head-mounted optical see-through displaying device used to display information to the user. The head mounted optical see-through displaying device allows the user to interact with their environment while using the head mounted device. More precisely, the present invention is concerned with a head mounted device comprising a see-around or see-through mechanism.

Head mounted see-trough display devices are capable of superimposing information, for example computer generated information, over the real-world view. Such head-mounted see-through display devices are used in particular for realizing augmented reality.

Usually, the visibility of an information, such as an image, displayed on a head mounted optical see-through device can be uneasy for the user. Indeed, the visibility of a displayed image depends on the quality of the source image and/or the performance of the display device and/or the user environment and/or the visual behavior of the user.

Furthermore, a user suffering from, for example, dichromatopsia or pigmentary retinopathy, feels supplementary difficulties for identifying the colors, and thus the access to the color information can be difficult.

For example, in low brightness conditions, the source image appears with few colors. The usual softwares configured to manage the display of a source image on a display device tend to fade the colors of the source image in the displayed image.

Therefore, there is a need for a head mounted optical see-through displaying device that could enhance the brightness of an image.

SUMMARY OF THE INVENTION

To this end, the invention proposes a display managing method for managing the display of an image from a source image to a user of an optical see-through displaying device, the source image comprising a plurality of zones, the method comprises:

- a display data providing step, during which display data relative to at least one intrinsic display parameter of the optical see-through displaying device are provided,
- a source image data providing step, during which source image data are provided, the source image data comprising for each zone at least an indication of the value of the zone brightness of the source image, and
- a displayed image data determining step, during which displayed image data are determined, the displayed image data comprising for each zone at least an adjusted value of the zone brightness determined based on a non-linear function of at least the display data and the source image data.

Advantageously, the display managing method according to the invention allows to obtain an improved contrast enhancement under all brightness conditions. Moreover, the display managing method allows a more comfortable vision for the user.

According to embodiments, the display managing method according to the invention may further include one or any possible combination of the following features:

- the non-linear function comprises at least a homothetic logarithmic function of at least the display data and the source image data;
- the display managing method further comprises a brightness threshold providing step, during which a brightness threshold is provided, and wherein during the displayed image data providing step, for each zone at least the adjusted value of the zone brightness is determined based on a non-linear function which is null if the indication of the value of the zone brightness of the source image is inferior to the brightness threshold;

- the display managing method further comprises an environment data providing step, during which environment data relative to at least the brightness of the environment of the user are provided, and wherein the displayed image data are further determined based on the environment data;
- the environment data comprise at least an indication of the brightness of the ambient environment of the user and/or an indication of the brightness of a real world scene seen by the user through the optical see-through displaying device;
- the environment data providing step comprises a real world image acquisition step, during which a real world image is acquired by a camera embedded in the optical see-through displaying device, the real world image corresponding to the real world scene seen by the user through the optical see-through displaying device, the real world image comprising a plurality of areas, a real world image brightness data determining step, during which real world image brightness data are determined, the real world image brightness data comprising for each area, at least an indication of the value of the area brightness of the real world image, and wherein during the displayed image data providing step, for each zone at least the value of the zone brightness is adjusted based on the real world image brightness data;
- the environment data comprise spectral and/or spatial and/or temporal environment data;
- the display managing method further comprises a user data providing step, during which user data relative to at least a visual parameter of the user are provided, and wherein the displayed image data are further determined based on the user data;
- the visual parameter of the user relates to pupil diameter and/or glare parameter and/or a visual behavior parameter of the user;
- the display managing method further comprises an adjustment step, during which the value of at least the zone brightness is adjusted relative to the user data and/or to the environment data such that the mean value of the brightness of the displayed image is constant;
- at least one of the source image data and the environment data and the user data is monitored over the time and the displayed image data are updated based on the evolution over time of at least one of the source image data and/or the environment data and/or the user data.

The invention also relates to a display managing component for managing the display of an image from a source image to a user of an optical see-through displaying device, the display managing component comprising:

- a memory configured to store computer executable instructions, and
- a processor for executing the computer executable instructions stored in the memory, wherein the computer executable instructions comprises instructions for:

  • providing display data relative to at least one intrinsic display parameter of the optical see-through displaying device,
  • providing source image data comprising for each zone at least an indication of the value of the zone brightness of the source image, and
  • determining displayed image data comprising for each zone at least an adjusted value of the zone brightness determined based on a non-linear function of at least the display data and the source image data.

The computer executable instructions preferably comprises one of the following instructions for:

• providing environment data relative to at least the brightness of the environment of the user are provided, and wherein the displayed image data are further determined based on the environment data, and/or
• providing user data relative to at least a visual parameter of the user are provided, and wherein the displayed image data are further determined based on the user data.

The invention also refers to an optical see-through displaying device comprising:

- a display device configured to display an image from a source image to a user, and

- a display managing component configured to manage the display of the image.

The invention also disclose a head mounted optical see-through displaying device configured to be worn by a user, comprising:

- a display device configured to display an image from a source image to the user, and
- a display managing component configured to manage the display of the image.

The invention further relates to a computer program product comprising one or more stored sequences of instructions that are accessible to a processor and which, when executed by the processor, causes the processor to carry out at least one of the steps of the method according to the invention.

The invention also relates to a computer-readable storage medium having a program recorded thereon; where the program makes the computer execute the method of the invention.

The invention further relates to a device comprising a processor adapted to store one or more sequence of instructions and to carry out at least one of the steps of the method according to the invention.

Unless specifically stated otherwise, as apparent from the following discussions, it is appreciated that throughout the specification discussions utilizing terms such as "computing", "calculating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The methods and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below.

In addition, embodiments of the present invention are not described with reference to any particular programming language. It will be appreciated that a variety of programming languages may be used to implement the teachings of the inventions as described herein.

BRIEF DESCRIPTION OF THE DRAWINGS

Other characteristics and advantages of the invention will become more apparent from the claims and from the following description of some embodiments given by way of example without limitation with reference to the drawings, in which:

- Figure 1 illustrates an embodiment of a head mounted optical see-through displaying device according to the invention,
- Figure 2 represents schematically a source image from which an image is displayed and the displayed image determined by a display managing method according to a first embodiment of the invention,
- Figure 3 is a general flow chart of an embodiment of the display managing method according to the invention,
- Figure 4 represents a flow chart of a second embodiment of the display managing method according to the invention,
- Figure 5 represents schematically an image of the environment seen through an optical see-through displaying device and a displayed image determined by a display managing method according to an embodiment of the invention,
- Figure 6 represent a flow chart of a third embodiment of the display managing method according to the invention, and
- Figure 7 is a histogram of the dynamic of the brightness of a source image and the corresponding displayed image according to the display managing method of the invention.

Elements in the figures are illustrated for simplicity and clarity and have not necessarily been drawn to scale. For example, the dimensions of some of the elements in the figure may be exaggerated relative to other elements to help improve the understanding of the embodiments of the present invention.

DETAILED DESCRIPTION OF PREFERRED EMBODIMENTS

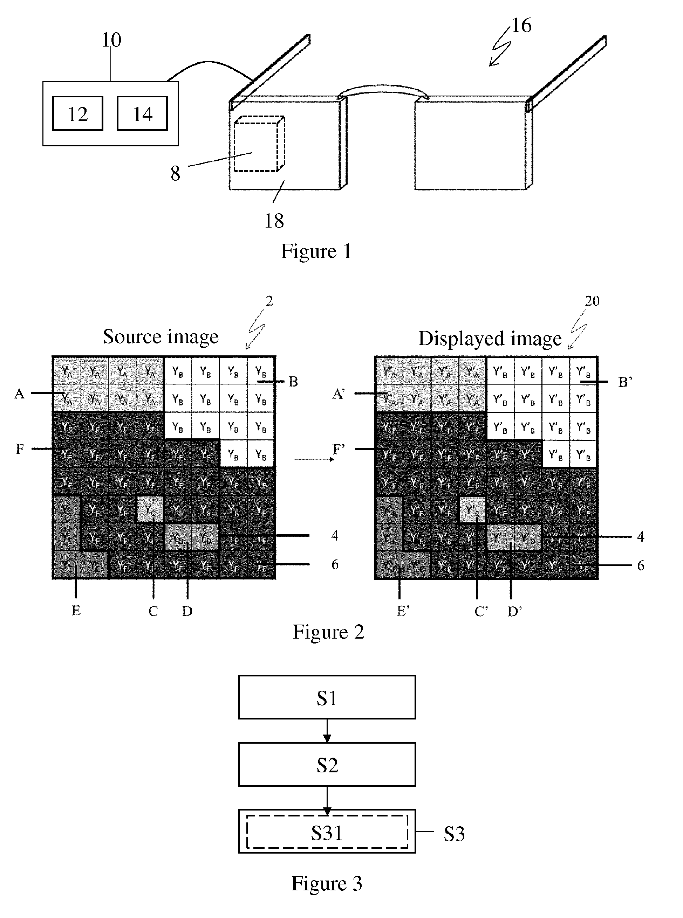

Figure 1 illustrates an embodiment of a head mounted device 16 according to the invention. The head mounted device comprises a display device 18 configured to display an image from a source image to a user when worn by said user, later identified as the wearer and a display managing component 10 configured to manage the display of the image.

The display device 18 is an optical see-through display device.

For example, the display device 18 comprises a display source (not illustrated), a collimating source (not illustrated) and a light conducting element (not illustrated). The light conducting element is configured to output a supplementary light through an exit face of said light conducting element towards an eye of the wearer. For example, the light conducting element can be a light-guide optical element (LOE).

Such display system allows a two-dimensional image source to be imaged to infinity or not and reflected towards the eye of the wearer.

More precisely, the optical see-through display device allows the user to interact with their environment while displaying information to the user. The device displays an image of the environment of the user with augmented reality based on a source image. Here, the displayed image with augmented reality corresponds to the source image having zones with adjusted brightness.

An image from a source image can be displayed on the whole display device 18 or can be displayed on an area 8 of the display device 18. An example of area 8 on which an image is displayed is illustrated on Figure 1. The display device 18 comprises intrinsic display parameters, such as the maximum resolution of an image and/or the maximum and minimum brightness values ($Y_{max}$, $Y_{min}$) that the display is able to display. The values of $Y_{max}$ and $Y_{min}$ can be measured data or manufacturer provided data.

The display managing component 10 is configured to manage the display of an image from a source image to a user of the optical see-through displaying device.

With reference to figure 2, a source image 2 comprises a plurality of pixels 6. On figure 2, the source image comprises a matrix of 8 pixels x 8 pixels. A pixel has a size and colorimetric data and is localized in the image by coordinates.

The size of a pixel 6 can be expressed in dots per inch (dpi) or in angular size perceived by a user.

The coordinates of a pixel 6, for example the coordinates of the center of the pixel, can be defined by its Cartesian coordinates relative to its position (x, y) in the image or by angular coordinates (a, b) according to a reference gazing direction of the user.

As it is well-known, the colorimetric data can be defined and measured according to different referential, for example RBG (Red Green Blue), YUV or YCbCr (brightness (Y), blue chrominance (U, Cb) and red chrominance (V, Cr)), which allow getting brightness data. For example, mathematical formulas defined in the following description are based on the YUV referential, the images being represented in the YUV form. An image is defined and described by a matrix YUV(a, b), where Y, U and V vary with the coordinates of each pixel 6.

For the sake of the description, the set of pixel data, also called matrix of pixel data, is thereafter noted YUVab or {Y, U, V, a, b}, the set of pixel colorimetric data is noted YUV and the "new" set of pixel colorimetric data resulting from the implementation of the display managing method according to the invention is noted YUV'.

Furthermore, the display managing component 10 comprises a memory 12 configured to store computer executable instructions and a processor 14 configured to execute computer executable instructions. When the computer executable instructions are executed by the processor, the processor carry out at least one of the steps of a display managing method according to the invention, and which will be detailed below.

With reference to figure 3, a display managing method according to the invention will now be detailed. The display managing method for managing the display of an image from a source image 2 to a user of an optical see-through displaying device comprises:

- a step of providing display data S1,
- a step of providing source image data S2, and
- a step of determining displayed image data S3.

The displayed image data both depends on the display data and on the source image data.

During the display data providing step S1, display data relative to at least one intrinsic display parameter of the optical see-through displaying device are provided.

During the source image data providing step S2, source image data are provided. The source image data comprises the number of pixels of the display intended to be used to display the image and colorimetric data for each pixel.

With reference to the image source 2 illustrated on figure 2, the source image 2 comprises a plurality of zones 4. A zone 4 of the source image 2 can be a pixel 6 or a group of contiguous pixels having noticeably a same brightness value. In other words, two contiguous pixels comprise the same brightness value if the difference of the brightness of the pixels is imperceptible for a user or inferior to a predetermined threshold. For example, as represented on Figure 2, the source image comprises six zones 4, noted zones A, B, C, D, E and F, comprising contiguous pixels having a same brightness value, noted $Y_A$, $Y_B$, $Y_C$, $Y_D$, $Y_E$ and $Y_F$. On Figure 2, the brightness $Y_A$ and $Y_B$ are different, and $Y_F$ is different from the brightness $Y_A$ to $Y_E$.

For clarity reasons, the term "zone" will be used in the sake of the description for defining the terms "pixel" or "group of contiguous pixels having a same brightness value".

Thus, the source image data comprises the number of zones 4, 6 and for each zone 4, 6 its size, coordinates and at least an indication of the value of the zone brightness of the source image 2.

For example, as illustrated on figure 2, each zone A to F respectively comprise a value of brightness $Y_A$ to $Y_F$. A grey scale is used to represent the brightness value of each zone. The zone B corresponds to a high brightness value, whereas the zone F corresponds to a low brightness value.

The indication of the value of the zone brightness may be an indication of the value of the zone brightness compared with a predetermined threshold, an indication of the value relative to a range of values, or may be the value of the zone brightness.

Then, during the displayed image data determining step S3, displayed image data are determined.

Likewise the source image 2, the displayed image 20 comprises a plurality of zones. As illustrated on figure 2, the displayed image 20 comprises six zones 4, comprising contiguous pixels having a same brightness value, noted $Y'_A$, $Y'_B$, $Y'_C$, $Y'_D$, $Y'_E$ and $Y'_F$. According to this embodiment, the displayed image 20 comprises the zones 4 identical to the zones of the image source 2. Each zone of the displayed image 20 has, an adjusted value of the zone brightness which can be equal to or different from the value of the brightness of corresponding zone of the source image.

The displayed image data comprises for each zone 4, 6 at least an adjusted value of the zone brightness determined based on a non-linear function of at least the display data and the source image data.

Once the displayed image data are determined, an image is displayed on the display device.

The display managing method can be applied to each pixel of a source image 2 of a source image 2 in order to obtain an improved contrast enhancement for the displayed image or to each zone 4, 6. This second option is less consuming computation time.

Moreover, the source image data can be monitored over the time. Thus, the displayed image data are updated based on the evolution over time of at least the source image data.

Advantageously, the non-linear function comprises a logarithmic function of at least the display data and the source image data. For example, the logarithmic function is a natural logarithmic function or a decimal logarithmic function of the brightness of a pixel of the source image 2.

In a preferred embodiment, the non-linear function comprises a homothetic logarithmic function of at least the display data and the source image data.

For example, the non-linear function could take the following form:

$$\begin{cases} Y' = (Y_{max} - Y_{min}) * \dfrac{\log(Y - y_{min} + 1)}{\log(y_{max} - y_{min})} \\ U' = U \\ V' = V \end{cases}$$

where:

- Y' and Y respectively represent an adjusted and an initial brightness of the zone 4,6,
- $y_{max}$ and $y_{min}$ respectively represent the maximum and minimum brightness data relative to the source image 2,
- U and V represent colorimetric data of the source image 2, and
- U' and V' represent adjusted colorimetric data.

As defined by the preceding non-linear function, adjusted colorimetric data (U', V') are equal to initial colorimetric data (U, V). Thus, while applying the non-linear function to the display data and the source image data, the colors of the displayed image stay unchanged in respect with the source data.

With the non-linear function defined in this embodiment, only the brightness Y is adjusted. However, according to other embodiments, colorimetric data (U, V) can also be adjusted.

The display managing method can comprise additional steps, in order to obtain a better quality of the displayed image. The different steps S31, S32, S33, S34, S36 will be described in the following description and can be taken alone or in any possible combination.

As illustrated on figure 3, the display managing method comprises advantageously a brightness threshold providing step S31, during which a brightness threshold is provided. The brightness threshold providing step S31 depends on the displayed image data determining step S3. During the step of providing displayed image data S31, for each zone 4, 6 at least the adjusted value of the zone brightness is determined based on a non-linear function which is null if the indication of the value of the zone brightness of the source image 2 is inferior to the brightness threshold.

By way of example, the non-linear function integrates a high pass filter and take the following form:

$$\begin{cases} \text{if } Y < S, Y' = 0; \text{either } Y' = R * (Y_{max} - Y_{min}) * \dfrac{\log(Y - y_{min} + 1)}{\log(y_{max} - y_{min})} \\ U' = U \\ V' = V \end{cases}$$

where:

- S represents a brightness threshold, and
- R represents a matrix of enhancement coefficients.

The non-linear function could also take the following form:

$$\begin{cases} \text{if } Y < S, Y' = 0; \text{either } Y' = R * (Y_{max} - S) * \dfrac{\log(Y - y_{min} + 1)}{\log(y_{max} - y_{min})} \\ U' = U \\ V' = V \end{cases}$$

Moreover, the brightness threshold providing step S31 allows reducing the computing time. Indeed, the calculation on the zones with a low zone brightness are avoided, which also allows reducing the noise of the displayed image. For example, as illustrated on figure 2, the zone F corresponds to low brightness conditions. Thus, the zone brightness $Y_F$ is smaller than the brightness threshold S, $Y_F$ and $Y'_F$ are equal.

As indicated herein before, in low brightness conditions, the brightness threshold of the display managing method allows reducing noise and enhancing the quality of the displayed image. Moreover, the brightness threshold of the display managing method allows reducing the discomfort of the user of the optical see-through device and reducing the computing time.

According to other embodiments of the method according to the invention, the non-linear function takes into account other different parameters, such as environment parameters or user parameters, as described in details in the following description. These parameters can be used independently from one another or in any possible combination. The combination of the parameters can be performed in all possible ways, such as multiplication, threshold, convolutions...

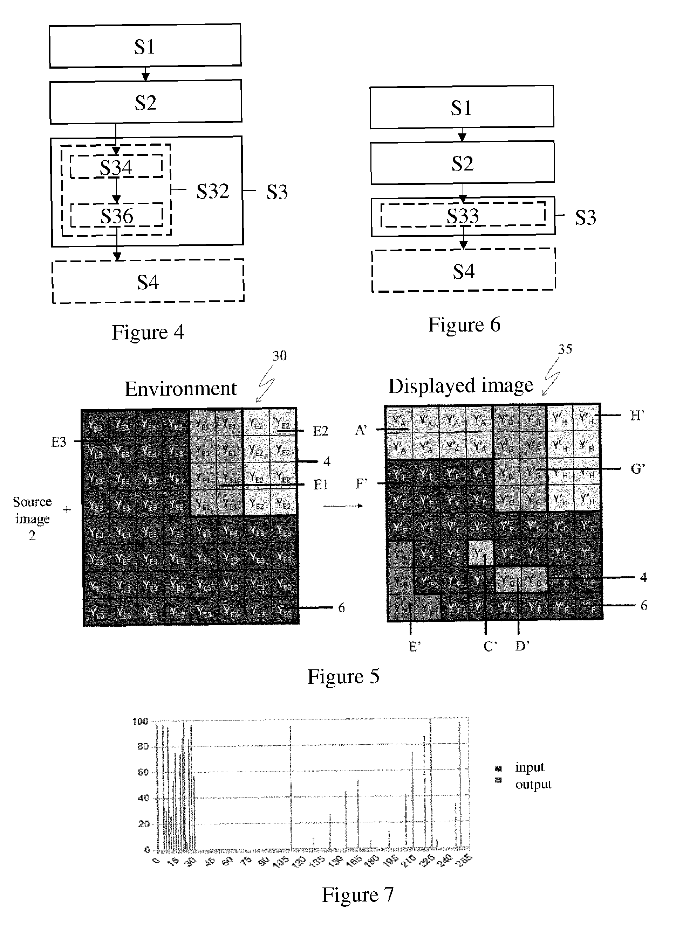

According to a second embodiment compatible with the previous one illustrated on figure 4, the display managing method comprises an environment data providing step S32. During the environment data providing step S32, environment data relative to at least the brightness of the environment of the user are provided. The environment data providing step S32 depends on the displayed image data determining step S3. The displayed image data are further determined based on the environment data.

According to an example, the non-linear function taking into account the environment takes the following form:

$$\begin{cases} Y' = R * ((Y_{max} - K * Y_{max}Env) - Y_{min}) * \dfrac{\log(Y(ab))}{\log(y_{max} - y_{min})} + K * YEnv(ab) \\ U' = U \\ V' = V \end{cases}$$

where:

- K represents a coefficient of taking into account the environment,
- YEnv(ab) is the matrix of brightness environment data, and
- $Y_{max}Env$ is the maximum brightness environment value.

According to another example, the non-linear function taking into account the environment could take the following form:

$$\begin{cases} \text{if } Z > Y_{max}, Y' = Y_{max}; \\ \text{either } Y' = Z; \text{ with } Z = R * (Y_{max} - Y_{min}) * \dfrac{\log(Y(ab))}{\log(y_{max} - y_{min})} + K * YEnv(ab) \\ U' = U \\ V' = V \end{cases}$$

where Z represents a function depending on the environment, the initial brightness of the zone 4, 6, the maximum and minimum brightness values relative to the display and to the source image 2.

For example, in figure 5, a real world scene 30 observed by the wearer through the displayed area 8 comprises three zones E1, E2 and E3, each zone comprising a zone brightness $Y_{E1}$, $Y_{E2}$, $Y_{E3}$ different from the other zone brightness.

After implementation of the display managing method according to the invention, the displayed image 35 comprises seven zones A' to H', the zone brightness of each zone being noted $Y'_A$, $Y'_C$, $Y'_D$, $Y'_E$, $Y'_F$, $Y'_G$ and $Y'_H$.

The zone brightness $Y'_A$, $Y'_C$, $Y'_D$ and $Y'_E$ are adjusted zone brightness depending on the source image 2.

The zone brightness $Y'_G$ and $Y'_H$ are adjusted zone brightness depending on the source image 2 and on the environment 30.

The environment data comprises at least an indication of the brightness of the ambient environment of the user and/or an indication of the brightness of a real world scene seen by the user through the optical see-through displaying device.

Furthermore, the environment data can comprise spectral and/or spatial and/or temporal environment data.

The environment data can be monitored over the time. Thus, the displayed image data are updated based on the evolution over time of at least the environment data.

According to a sub-embodiment illustrated on figure 4, the environment data providing step comprises a real world image acquisition step S34 followed by a real world image brightness data determining step S36.

During the real world image acquisition step S34, a real world image can be acquired by a camera embedded in the optical see-through displaying device. The real world image 30 comprises a plurality of areas and corresponds to the real world scene seen by the user through the optical see-through displaying device.

During the real world image brightness data determining step S36, real world image brightness data are determined. The real world image brightness data comprises for each area, at least an indication of the value of the area brightness of the real world image. Moreover, during the displayed image data providing step, for each zone 4, 6 at least the value of the zone brightness is adjusted based on the real world image brightness data.

A brightness sensor or a camera embedded in the optical see-through displaying device acquires measurements of the brightness environment, in order to improve the quality of the displayed image. Indeed, the environment seen through the optical see-through device, more precisely the brightness environment, affects the quality of the displayed image.

The display managing method improves the brightness of the displayed image and thus guarantee an improved contrast and dynamic of the displayed image.

With reference to figure 6, according to a third embodiment compatible with all the previous ones, the display managing method comprises a user data providing step S33. During the step of providing user data, data relative to at least a visual parameter of the user are provided. The displayed image data are further determined based on the user data.

The visual parameter of the user relates to pupil diameter and/or glare parameter and/or a visual behavior parameter of the user.

The user data can be monitored over the time. Thus, the displayed image data are updated based on the evolution over time of at least the user data.

The user data can take into account the difficulties for a user to adapt to the brightness variations. For example, a constant mean value of the brightness of the display can be maintained. The brightness of the displayed image can be adjusted, or the brightness of the environment can be adjusted. For example, the brightness of the environment can be adjusted with classical filters, such as filters with permanent light attenuation rate, or with electro-chrome filters, such as filters with light attenuation rate that may vary over time.

By way of example, in order to obtain a constant mean value of the brightness of the display, the non-linear function could take the following form:

$$\begin{cases} Y' = C * \dfrac{Z}{mean(Z)} \text{ with } Z = R * (Y_{max} - Y_{min}) * \dfrac{\log(Y(ab))}{\log(y_{max} - y_{min})} \\ U' = U \\ V' = V \end{cases}$$

where:

- Z represents a function depending on the initial brightness of the zone 4, 6, the maximum and minimum brightness values relative to the display and to the source image2 , and
- C is a constant value.

The constant exposition for the user of an optical see-through device compensates the difficulties for a user to adapt to the brightness variations and reduces the discomfort periods, which can be more or less longer depending on the user, resulting from the brightness variations. Thus, the display managing method allows maintaining a constant exposition for the user, by adjusting the brightness of the displayed image and/or of the environment.

According to another embodiment compatible with previous ones, the non-linear function may take into account the dynamic of the brightness of a source image that a user is able to detect. As it is well-known, a user is more sensible to the brightness variations than to color variations. Thus, the display managing method adapt the sensibility of a user according to the visible spectrum for obtaining a law per color. For example, for color-blind user, the dynamic of the source image is adjusted in order to obtain brightness variations perceptible by the user.

For example, the non-linear function could take the following form:

$$\begin{cases} Y' = \dfrac{Y_{max}User * \log(Y)}{\log(Y_{max}User - Y_{min}User)} \\ U' = U \\ V' = V \end{cases}$$

where $Y_{max}User$ and $Y_{min}User$ are respectively the maximum and minimum values of the brightness of an image that a user is able to detect.

For example, as illustrated on figure 7, the dynamic of the brightness of the source image is comprised in a range of values between 5 and 30, and the dynamic of the brightness of the displayed image, after implementation of the method according to the invention, is comprised in a range of values between 0 and 255. The dynamic of the brightness of the source image has been spread in order to allow a user to perceive brightness variations.

As indicated herein before, a non-linear function according to the display managing method focuses on brightness variations that a user is able to detect. The display managing method adapts the displayed image by focusing on the brightness variations perceptible by the user.

As illustrated on figures 4 and 6, the display managing method can further comprise an adjustment step S4. During the step of adjustment S4, the value of at least the zone brightness is adjusted relative to the user data and/or to the environment data such that the mean value of the brightness of the displayed image is constant. Thus, the adjustment step S4 is compatible with the steps S32, S33, S34 and S36.

The invention has been described above with the aid of embodiments without limitation of the general inventive concept. For example, an embodiment of a head mounted optical see-through displaying device according to the invention has been described above. The equivalent features could be applied without limitation to an optical see-through displaying device according to the invention, such as a tablet or a smartphone.

Many further modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A display managing method for managing the display of an image from a source image (2) to a user of an optical see-through displaying device, the source image (2) comprising a plurality of zones (4, 6), the method comprises:

   - a display data providing step (S1), during which display data relative to at least one intrinsic display parameter of the optical see-through displaying device are provided,
   - a source image data providing step (S2), during which source image data are provided, the source image data comprising for each zone (4, 6) at least an indication of the value of the zone brightness of the source image (2), and

- a displayed image data determining step (S3), during which displayed image data are determined, the displayed image data comprising for each zone (4, 6) at least an adjusted value of the zone brightness determined based on a non-linear function of at least the display data and the source image data.

2. Method according to claim 1, wherein the non-linear function comprises at least a homothetic logarithmic function of at least the display data and the source image data.

3. Method according to claim 1 or 2, further comprising a brightness threshold providing step (S31), during which a brightness threshold is provided, and wherein during the displayed image data providing step, for each zone (4, 6) at least the adjusted value of the zone brightness is determined based on a non-linear function which is null if the indication of the value of the zone brightness of the source image (2) is inferior to the brightness threshold.

4. Method according to any of the preceding claims 1 to 3, further comprising an environment data providing step (S32), during which environment data relative to at least the brightness of the environment of the user are provided, and wherein the displayed image data are further determined based on the environment data.

5. Method according to claim 4, wherein the environment data comprise at least an indication of the brightness of the ambient environment of the user and/or an indication of the brightness of a real world scene seen by the user through the optical see-through displaying device.

6. Method according to claim 4 or 5, wherein the environment data providing step comprises:

   - a real world image acquisition step (S34), during which a real world image is acquired by a camera embedded in the optical see-through displaying device, the real world image corresponding to the real world scene seen by the user through the optical see-through displaying device, the real world image comprising a plurality of areas,
   - a real world image brightness data determining step (S36), during which real world image brightness data are determined, the real world image brightness data comprising for each area, at least an indication of the value of the area brightness of the real world image, and
   wherein during the displayed image data providing step, for each zone (4, 6) at least the value of the zone brightness is adjusted based on the real world image brightness data.

7. Method according to any of the preceding claims 4 to 6, wherein the environment data comprise spectral and/or spatial and/or temporal environment data.

8. Method according to any of the preceding claims 1 to 7, further comprising a user data providing step (S33), during which user data relative to at least a visual parameter of the user are provided, and wherein the displayed image data are further determined based on the user data.

9. Method according to claim 8, wherein the visual parameter of the user relates to pupil diameter and/or glare parameter and/or a visual behavior parameter of the user.

10. Method according to any of the preceding claims 4 to 9, further comprising an adjustment step (S4), during which the value of at least the zone brightness is adjusted relative to the user data and/or to the environment data such that the mean value of the brightness of the displayed image is constant.

11. Method according to any of the preceding claims 1 to 10, wherein at least one of the source image data and the environment data and the user data is monitored over the time and the displayed image data are updated based on the evolution over time of at least one of the source image data and/or the environment data and/or the user data.

12. A display managing component (10) for managing the display of an image from a source image (2) to a user of an optical see-through displaying device, the display managing component (10) comprising:

   - a memory (12) configured to store computer executable instructions, and
   - a processor (14) for executing the computer executable instructions
   - stored in the memory (12), wherein the computer executable instructions comprises instructions for:

       • providing display data relative to at least one intrinsic display parameter of the optical see-through displaying device,
• providing source image data comprising for each zone (4, 6) at least an indication of the value of the zone brightness of the source image (2), and
• determining displayed image data comprising for each zone (4, 6) at least an adjusted value of the zone brightness determined based on a non-linear function of at least the display data and the source image data.

13. A display managing component (10) according to claim 12, wherein the computer executable instructions comprises one of the following instructions for:

• providing environment data relative to at least the brightness of the environment of the user are provided, and wherein the displayed image data are further determined based on the environment data, and/or
• providing user data relative to at least a visual parameter of the user are provided, and wherein the displayed image data are further determined based on the user data.

14. An optical see-through displaying device comprising:

- a display device configured to display an image from a source image (2) to a user, and
- a display managing component (10) configured to manage the display of the image according to claim 12 or 13.

15. A head mounted optical see-through displaying device (16) configured to be worn by a user, comprising:

- a display device (18) configured to display an image from a source (2) image to the user, and
- a display managing component (10) configured to manage the display of the image according to claim 12 or 13.

Figure 1

Figure 2

Figure 3

Figure 4

Figure 6

Figure 5

Figure 7

Europäisches
Patentamt

European
Patent Office

Office européen
des brevets

# EUROPEAN SEARCH REPORT

Application Number

EP 15 30 6379

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | F. DRAGO ET AL: "Adaptive Logarithmic Mapping For Displaying High Contrast Scenes", COMPUTER GRAPHICS FORUM, vol. 22, no. 3, 1 September 2003 (2003-09-01), pages 419-426, XP055099276, ISSN: 0167-7055, DOI: 10.1111/1467-8659.00689 * Section 3.3 Algorithm * ----- | 1,2,12, 14,15 | INV. G09G3/20 G02B27/01 |

**TECHNICAL FIELDS SEARCHED (IPC)**

G09G
G02B

~~The present search report has been drawn up for all claims~~

| Place of search | Date of completion of the search | Examiner |
|---|---|---|
| Munich | 9 November 2015 | Gartlan, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**Application Number**

EP 15 30 6379

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1, 2, 12, 14, 15

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION**
**SHEET B**

Application Number

EP 15 30 6379

The Search Division considers that the present European patent application does not comply with the requirements of unity of invention and relates to several inventions or groups of inventions, namely:

1. claims: 1, 2, 12, 14, 15

    the non-linear function comprises at least a homothetic logarithmic function of at least the display data and the source image data, solving the problem of how to imitate the human response to light.
    ---

2. claim: 3

    a brightness threshold providing step, during which a brightness threshold is provided, and wherein during the displayed image data providing step, for each zone at least the adjusted value of the zone brightness is determined based on a non-linear function which is null if the indication of the value of the zone brightness of the source image is inferior to the brightness threshold, solving the problem of saving power
    ---

3. claims: 4-7

    an environment data providing step, during which environment data relative to at least the brightness of the environment of the user are provided, and wherein the displayed image data are further determined based on the environment data, solving the problem of improving the quality of display with respect to different outdoor conditions
    ---

4. claims: 8-11, 13

    a user data providing step, during which user data relative to at least a visual parameter of the user are provided, and wherein the displayed image data are further determined based on the user data, solving the problem of adapting to personal preferences
    ---